(19) Europäisches Patentamt
European Patent Office
Office européen des brevets

(11) EP 3 764 276 A1

(12) EUROPEAN PATENT APPLICATION
published in accordance with Art. 153(4) EPC

(43) Date of publication:
**13.01.2021 Bulletin 2021/02**

(21) Application number: **19763983.4**

(22) Date of filing: **20.02.2019**

(51) Int Cl.:
***G06K 9/00*** *(2006.01)*

(86) International application number:
**PCT/CN2019/075534**

(87) International publication number:
**WO 2019/169996 (12.09.2019 Gazette 2019/37)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **05.03.2018 CN 201810179638**

(71) Applicant: **TENCENT TECHNOLOGY (SHENZHEN) COMPANY LIMITED**
**Shenzhen, Guangdong 518057 (CN)**

(72) Inventors:
- **WANG, Bairui**
  **Shenzhen, Guangdong 518057 (CN)**
- **MA, Lin**
  **Shenzhen, Guangdong 518057 (CN)**
- **LIU, Wei**
  **Shenzhen, Guangdong 518057 (CN)**

(74) Representative: **Eisenführ Speiser**
**Patentanwälte Rechtsanwälte PartGmbB**
**Postfach 31 02 60**
**80102 München (DE)**

# (54) VIDEO PROCESSING METHOD AND APPARATUS, VIDEO RETRIEVAL METHOD AND APPARATUS, STORAGE MEDIUM AND SERVER

(57) Disclosed are a video processing method and apparatus, a video retrieval method and apparatus, a medium and a server. The video processing method comprises: carrying out encoding and decoding processing on an original video by means of an encoder and a decoder to acquire a video characteristic of the original video and a hidden state in a decoding stage; reconstructing, according to the hidden state in the decoding stage, a video characteristic of a target video by means of a reconstructor; acquiring a difference between the video characteristic of the target video and the video characteristic of the original video; and adjusting a processing parameter of at least one of the decoder and the reconstructor according to the difference in order to reduce the difference.

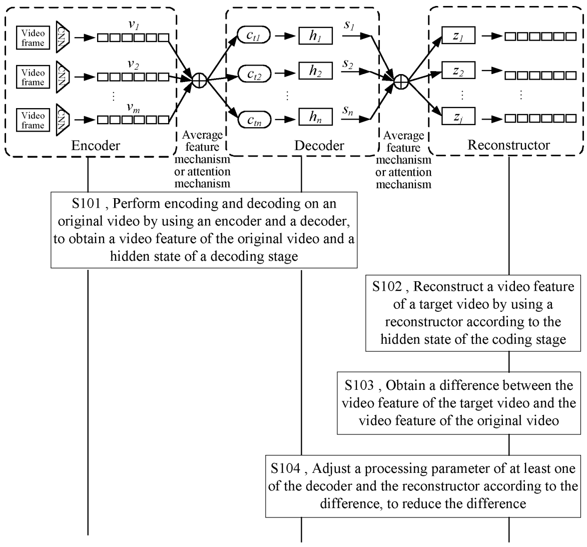


FIG. 3

EP 3 764 276 A1

## Description

This application claims priority to Chinese Patent Application No. 201810179638.4, titled "VIDEO PROCESSING METHOD AND APPARATUS, VIDEO RETRIEVAL METHOD AND APPARATUS, STORAGE MEDIUM, AND SERVER" and filed with the Chinese Patent Office on March 5, 2018, which is incorporated herein by reference in its entirety.

FIELD

The present disclosure relates to the technical field of Internet, in particular to the technical field of video processing, and in more particular, to a video processing method, a video processing apparatus, a video retrieval method, a video retrieval apparatus, a computer storage medium, and a server.

BACKGROUND

A video content understanding service emerges to facilitate quick understanding of the main content of videos. The video content understanding service includes: converting video content to describe video content with a natural sentence. An important factor of measuring the quality of the video content understanding service is a description accuracy of a natural sentence for describing video content. In the conventional art, a video processing procedure generally includes an encoding stage and a decoding stage. In the encoding stage, an encoder performs feature extraction on each frame of an original video. In the decoding stage, a decoder predicts a natural sentence for describing the content of the video according to an extracted video feature. Although the video content understanding service is implemented by using the solution in the conventional art, only a natural sentence for describing video content is obtained, and how to improve a description accuracy of the natural sentence for describing the video content is not considered. Consequently, the quality of the video content understanding service cannot be ensured.

SUMMARY

A video processing method and apparatus, a video retrieval method and apparatus, a storage medium, and a server are provided according to embodiments of the present disclosure.

A video processing method is provided. The method is applied to a video processing system. The video processing system includes an encoder, a decoder, and a reconstructor, and the method includes:

performing encoding and decoding on an original video by using the encoder and the decoder, to obtain a video feature of the original video and a hidden state of a decoding stage;

reconstructing a video feature of a target video by using the reconstructor according to the hidden state of the decoding stage;

obtaining a difference between the video feature of the target video and the video feature of the original video; and

adjusting a processing parameter of at least one of the decoder and the reconstructor according to the difference, to reduce the difference.

In an embodiment, the video processing method further includes:

determining words corresponding to the original video by using the decoder according to the hidden state of the decoding stage; and

merging the words according to a time sequence of decoding time instants by using the decoder to form a natural sentence for describing the original video.

A video retrieval method is provided. The method includes:

receiving a video retrieval request, where the video retrieval request carries retrieval key information;

searching a video database for a natural sentence matching the retrieval key information, wherein the video database includes a video and a natural sentence corresponding to the video, and the natural sentence corresponding to the video is obtained by using the video processing method for generating a natural sentence; and

obtaining a matching video corresponding to the natural sentence matching the retrieval key information, and outputting the matching video.

A video processing apparatus is provided. The apparatus includes a processing unit, a reconstruction unit, a difference obtaining unit and an optimization unit. The processing unit is configured to perform encoding and decoding on an original video by using an encoder and a decoder, to obtain a video feature of the original video and a hidden state of a decoding stage. The reconstruction unit is configured to reconstruct a video feature of a target video by using a reconstructor according to the hidden state of the decoding stage. The difference obtaining unit is configured to obtain a difference between the video feature of the target video and the video feature of the original video. The optimization unit is configured to adjust a processing parameter of at least one of the decoder and the reconstructor according to the difference, to reduce the difference.

In an embodiment, the processing unit is further configured to: determine words corresponding to the original video by using the decoder according to the hidden state of the decoding stage; and merge the words according to a time sequence of decoding time instants by using the decoder to form a natural sentence for describing the original video.

A video retrieval apparatus is provided. The apparatus includes: a receiving unit, a retrieval unit, an obtaining unit and an output unit. The receiving unit is configured to receive a video retrieval request. The video retrieval request carries retrieval key information. The retrieval unit is configured to search a video database for a natural sentence matching the retrieval key information. The video database includes a video and a natural sentence corresponding to the video. The natural sentence corresponding to the video is obtained by using the video processing apparatus for generating a natural sentence. The obtaining unit is configured to obtain a matching video corresponding to the natural sentence matching the retrieval key information. The output unit is configured to output the matching video.

A non-volatile computer-readable storage medium storing computer-readable instructions is provided. The computer-readable instructions, when being executed by one or more processors, cause the one or more processors to perform the following operations:

performing encoding and decoding on an original video by using an encoder and a decoder, to obtain a video feature of the original video and a hidden state of a decoding stage;

reconstructing a video feature of a target video by using the reconstructor according to the hidden state of the decoding stage;

obtaining a difference between the video feature of the target video and the video feature of the original video; and

adjusting a processing parameter of at least one of the decoder and the reconstructor according to the difference, to reduce the difference.

In an embodiment, the computer-readable instructions, when being executed by the one or more processors, cause the one or more processors to further perform the following operations:

determining words corresponding to the original video by using the decoder according to the hidden state of the decoding stage; and

merging the words according to a time sequence of decoding time instants by using the decoder to form a natural sentence for describing the original video.

A non-volatile computer-readable storage medium storing computer-readable instructions is provided. The computer-readable instructions, when being executed by one or more processors, cause the one or more processors to perform the following operations:

receiving a video retrieval request, where the video retrieval request carries retrieval key information;

searching a video database for a natural sentence matching the retrieval key information, where the video database includes a video and a natural sentence corresponding to the video, and the natural sentence corresponding to the video is obtained by performing operations in the video processing method for generating a natural sentence; and

obtaining a matching video corresponding to the natural sentence matching the retrieval key information, and outputting the matching video.

A server including a memory and a processor is provided. The memory stores computer-readable instructions, and the computer-readable instructions, when being executed by the processor, causes the processor to perform the following operations:

performing encoding and decoding on an original video by using an encoder and a decoder, to obtain a video feature of the original video and a hidden state of a decoding stage;

reconstructing a video feature of a target video by using the reconstructor according to the hidden state of the decoding stage;

obtaining a difference between the video feature of the target video and the video feature of the original video; and

adjusting a processing parameter of at least one of the decoder and the reconstructor according to the difference, to reduce the difference.

In an embodiment, the computer-readable instructions, when being executed by the one or more processors, cause the one or more processors to further perform the following operations:

determining words corresponding to the original video by using the decoder according to the hidden state of the decoding stage; and

merging the words according to a time sequence of decoding time instants by using the decoder to form a natural sentence for describing the original video.

A server including a memory and a processor is provided. The memory stores computer-readable instructions, and the computer-readable instructions, when being executed by the processor, cause the processor to perform the following operations:

receiving a video retrieval request, where the video retrieval request carries retrieval key information;

searching a video database for a natural sentence matching the retrieval key information, where the video database includes a video and a natural sentence corresponding to the video, and the natural sentence corresponding to the video is obtained by performing operations in the video processing method for generating a natural sentence; and

obtaining a matching video corresponding to the natural sentence matching the retrieval key information, and outputting the matching video.

Details of one or more embodiments of the present disclosure are provided in the accompany drawings and description below. Other features, objectives, and advantages of the present disclosure become apparent from the specification, the accompanying drawings, and the claims.

BRIEF DESCRIPTION OF THE DRAWINGS

To describe the technical solutions in the embodiments of the present disclosure or the conventional art more clearly, the accompanying drawings required for describing the embodiments or the conventional art are described hereinafter. Apparently, the accompanying drawings in the following description show merely some embodiments of the present disclosure, and a person of ordinary skill in the art may derive other drawings from the accompanying drawings without creative efforts.

FIG. 1 is a schematic structural diagram of a framework of a conventional video processing system.

FIG. 2 is a schematic structural diagram of a framework of a video processing system according to an embodiment of the present disclosure.

FIG. 3 is a flowchart of a video processing method according to an embodiment of the present disclosure.

FIG. 4 is a flowchart of another video processing method according to an embodiment of the present disclosure.

FIG. 5 is a flowchart of still another video processing method according to an embodiment of the present disclosure.

FIG. 6 is a schematic structural diagram of a video processing apparatus according to an embodiment of the present disclosure.

FIG. 7 is a flowchart of a video retrieval method according to an embodiment of the present disclosure.

FIG. 8a is a schematic diagram of a page of a video website according to an embodiment of the present disclosure.

FIG. 8b is a schematic diagram of a video retrieval interface of a video website according to an embodiment of the present disclosure.

FIG. 8c is a schematic diagram of a retrieval result interface of a video website according to an embodiment of the present disclosure.

FIG. 9 is a schematic structural diagram of a video retrieval apparatus according to an embodiment of the present disclosure.

FIG. 10 is a schematic structural diagram of a server according to an embodiment of the present disclosure.

DETAILED DESCRIPTION OF EMBODIMENTS

The technical solutions in the embodiments of the present disclosure are described clearly and completely with reference to the accompanying drawings in the embodiments of the present disclosure hereinafter.

A video content understanding service emerges to facilitate quick understanding of the main content of videos. The so-called video content understanding service includes: performing a series of encoding and decoding processing such as video feature extraction and video content understanding on a video, to eventually generate a natural sentence for describing video content. In other words, the video content understanding service is a service for describing video content with a natural sentence. The video content understanding service may be applied to multiple Internet scenarios. For example, the video content understanding service may be applied to a categorization scenario of a video website in which videos are categorized based on natural sentence descriptions of the videos. For another example, the video content understanding service may further be applied to a retrieval scenario of a video website in which videos are retrieved based on natural sentence descriptions of the videos, and may be combined with a voice retrieval system to convert natural sentences of videos into voice for output to help the visually impaired to perform video retrieval.

An important factor of measuring the quality of the video content understanding service is a description accuracy of a natural sentence for describing video content. A higher description accuracy of the natural sentence indicates a higher matching degree between content expressed by the natural sentence and the video content, so that the quality of the video content understanding service is improved, and user experience is better. Conversely, a lower description accuracy of the natural sentence indicates a lower matching degree between the content expressed by the natural sentence and the video content, resulting in that the quality of the video content understanding service is reduced, and the user experience is poorer. In a conventional solution, a video processing system shown in FIG. 1 is configured to implement the video content understanding service. Referring to FIG. 1, a framework structure of the video processing system is mainly formed by an encoder and a decoder. Correspondingly, an existing video processing procedure includes an encoding stage and a decoding stage. In the encoding stage, the encoder performs feature extraction on each frame of an original video. In the decoding stage, an extracted frame feature is transformed in a manner such as an average feature mechanism or an attention mechanism, and the decoder then predicts a natural sentence for describing the content of the video according to a transformed video feature. It may be seen from the foregoing video processing solution that, in the conventional solution, the decoder generates the natural sentence by using the video feature outputted by the encoder. However, in the natural sentence generated by using the conventional solution, a description accuracy of the natural sentence for describing video content may be affected because partial semantics of the video content are neglected, and thus the quality of the video content understanding service is affected.

Based on this, a following comprehensive concept of a video processing is provided according to an embodiment of the present disclosure. A description accuracy of a natural sentence for describing video content is improved by using both forward information from the video content to the natural sentence and backward information from the natural sentence to the video content, thereby improving the quality of the video content understanding service. A specific principle is as follows. Since a natural sentence for describing content of an original video can be generated by performing a series of processing on the content of the original video; conversely, the content of the original video can be restored by preforming a series of processing on the generated natural sentence. If a difference between the restored content and the content of the original video is relatively small (for example, less than a preset threshold), it is indicated that the generated natural sentence provides relatively accurate description of the content of the original video. Otherwise, it is indicated that the generated natural sentence does not provide an adequately accurate description of the content of the original video. Based on this principle, the video processing system provided in this embodiment of the present disclosure includes a reconstructor configured to reconstruct and restore the video content based on the conventional solution. Referring to FIG. 2, the video processing system in an embodiment of the present disclosure includes an encoder, a decoder, and a reconstructor. The encoder, the decoder, and the reconstructor may be devices formed by hardware, or may be implemented in the form of computer programs. The computer programs may be run on a server shown in FIG. 10 or may be implemented by combining software and hardware. It should be noted that, in the subsequent embodiments of the present disclosure, the original video is a to-be-described video that is originally inputted into the encoder, and a target video is an inputted video that is reconstructed and restored by the reconstructor according to the natural sentence obtained through decoding. Based on the video processing system shown in FIG. 2, there are mainly four stages in a video processing procedure in the embodiment of the present disclosure, including an encoding stage, a decoding stage, a reconstruction stage, and an optimization stage. The stages are as follows:

1. Encoding stage:

An original video is inputted into the encoder, and the encoder performs feature extraction on each frame of the original video, to obtain a frame feature sequence. The frame feature sequence may also be referred to as a video feature of the original video. Generally, the encoder may perform feature extraction based on a convolutional neural network (CNN).

In an embodiment, an example in which the encoder performs feature extraction based on a CNN Inception-V4 is used. For an original video including $m$ ($m$ is a positive integer) frames, the encoder may extract a feature $v_i$ of each frame by using the convolutional neural network Inception-V4, and the feature $v_i$ is a feature vector of 1536 dimensions. Therefore, a frame feature sequence $V = \{v_1, v_2......v_m\}$ may be eventually obtained.

2. Decoding stage:

After the frame feature sequence $V$ of the original video is obtained, the frame feature sequence may be transformed in a manner such as an average feature mechanism or an attention mechanism, and a video feature obtained through transformation is then inputted into the decoder. The decoder predicts words at multiple decoding time instants according to the video feature, and merges the words at the decoding time instants according to a time sequence to generate a natural sentence for describing content of the original video.

The average feature mechanism refers to performing integration and transformation on the frame feature sequence according to a method for calculating an average feature. In this embodiment of the present disclosure, the frame feature sequence $V$ is integrated based on the average feature mechanism, and the integrated video feature may be expressed by the following Formula (1):

$$C = \frac{1}{m}\sum_{i=1}^{m} v_i \qquad (1).$$

The attention mechanism, also referred to as an attention model, is widely applied to various types of deep learning tasks such as natural language processing, image recognition, and voice recognition, and greatly improves the deep learning tasks. The attention mechanism may include a spatial attention mechanism and a temporal attention mechanism. In an encoding and decoding processing framework of videos, the temporal attention mechanism is applied more widely. During specific implementation, the system performance in sequence-to-sequence under a natural processing mode can be effectively improved either by introducing the attention mechanism into an encoder framework to perform weighted transformation on a source sequence or by introducing the attention mechanism into a decoder framework to perform weighted transformation on a target sequence. In this embodiment of the present disclosure, the frame feature sequence V is integrated based on the temporal attention mechanism, and the integrated video feature may be expressed by the following Formula (2):

$$C = \sum_{i=1}^{m} \alpha_i v_i$$
$$\sum_{i=1}^{m} \alpha_i = 1 \qquad (2)$$

In the foregoing Formula (2), $\alpha_i$ indicates a dynamic weight of the frame feature $v_i$. It may be known from the foregoing Formula (2) that, according to the temporal attention mechanism, one weight is allocated to each frame feature, and an integrated feature is obtained by calculating a weighted sum of all frame features.

Generally, the decoder may predict the natural sentence by using a recurrent neural network (RNN). In an embodiment, for example, a recurrent neural network of a long short-term memory (LSTM) (referred to as an LSTM network for short below) is used and the frame feature sequence is transformed by using the temporal attention mechanism. Assuming that the natural sentence that is generated by the decoder and is used for describing the content of the original video is represented by S. The length of the natural sentence S is n (n is a positive integer), and a value of n may be set according to an actual requirement. For example, it is set that $n$ = 30, which indicates that the length of the natural sentence S is equal to a length of 30 words. For another example, it is set that $n$ = 25, which indicates that the length of the natural sentence S is equal to a length of 25 words. Because the length of the natural sentence S is n, it is indicated that the decoder performs a total of n times of decoding processing in the decoding stage. Each time of decoding processing needs to predict one word. That is, the decoder obtains a word $s_1$ through prediction at a decoding time instant $t_1$, obtains a word $s_2$ through prediction at a decoding time instant $t_2$, and so on, and obtains a word $s_n$ through prediction at a decoding time instant $t_n$. In other words, in the decoding stage, the decoder obtains a word $s_k$ through prediction at a decoding time instant $t_k$ (k is a positive integer, and $1 \leq k \leq n$). Therefore, the natural sentence obtained by the decoder through prediction is $S = \{s_1, s_2, ...s_k, .., s_n\}$. In this case, a specific processing procedure of the decoding stage according to this embodiment of the present disclosure is as follows.

To capture global time information in the original video, once the decoder predicts a word, the frame feature sequence $V$ is integrated once by using the temporal attention mechanism. For specific integration processing, one may refer to the foregoing Formula (2). However, in the decoding stage according to the embodiment of the present disclosure, according to the time attention mechanism, when a weight is to be allocated to each frame at a current decoding time instant, a hidden state of the LSTM network of the decoder at a previous decoding time instant is to be considered. Therefore, integrated features obtained by performing integration at different decoding time instants may be different. Therefore, the foregoing Formula (2) may be transformed into the following Formula (3):

$$C_{t_k} = \sum_{i=1}^{m} \alpha_i^{t_k} v_i$$
$$\sum_{i=1}^{m} \alpha_i^{t_k} = 1 \qquad (3)$$

In the foregoing Formula (3), $C_{t_k}$ indicates an integrated feature obtained at any decoding time instant $t_k$, and $\alpha_i^{t_k}$ indicates a dynamic weight allocated to a frame feature $v_i$ at a decoding time instant $t_k$. The integrated feature obtained at each decoding time instant is inputted into the decoder, and the decoder predicts a word at each decoding time instant according to the inputted integrated feature. For a process in which the decoder predicts a word, one may refer to the following Formula (4):

$$P(s_k \mid s_{<k}, V, \theta) \propto \exp(f(s_{k-1}, h_k, c_{t_k}, \theta)) \qquad (4).$$

In which, $s_k \in S = \{s_1, s_2, ...s_k..., s_n\}$ indicates a k-th word in the natural sentence S, $s_{<k}$ indicates words that have been obtained through prediction in the natural sentence S, and $\theta$ indicates a processing parameter of the decoder; $P()$ indicates a probability of the word $s_k$ obtained through prediction at a current decoding time instant, exp() indicates an exponential function, and $h_k$ indicates the k-th hidden state of the LSTM network of the decoder; $f()$ indicates an activation function of the LSTM network of the decoder. It may be known from the foregoing Formula (4) that, in the decoding stage, the decoder can predict a probability of the word $s_k$ at any decoding time instant $t_k$. At the same time, the decoder obtains the hidden state $h_k$ of the LSTM network of the decoder at any decoding time instant $t_k$, and merges obtained hidden states at multiple decoding time instants according to a time sequence of the decoding time instants, to obtain a hidden state of the decoding stage. The hidden state is also referred to as a hidden state sequence $H = \{h_1, h_2, ...h_k, ...h_n\}$ of the decoding stage.

3. Reconstruction stage:

The hidden state sequence H of the decoding stage is transformed in a manner such as an average feature mechanism or an attention mechanism, the transformed hidden state is inputted into the reconstructor, and the reconstructor reconstructs a feature of a target video according to the transformed hidden state.

In an embodiment, the reconstructor may reconstruct a feature of an inputted video based on a deep neural network. The deep neural network herein may include, but is not limited to, a convolutional neural network and a recurrent neural network. An LSTM network is used as an example. The hidden state sequence H of the decoding stage is inputted to an LSTM network of the reconstructor, and a global feature and/or local features of the target video may be reconstructed. The global feature herein represents a common feature of all video frames, and the local feature represents a specific frame feature.

In an embodiment, the reconstructor may reconstruct a global feature of the target video.

First, to reconstruct the global feature of the target video, the reconstructor needs to fully consider hidden states in the decoding stage at all decoding time instants. Corresponding to the n times of decoding processing performed by the decoder in the decoding stage, the reconstructor needs to perform n times of reconstruction processing in the reconstruction stage. It is assumed that a reconstruction time instant is $t_j$, where $j$ is a positive integer, and $1 \leq j \leq n$. It may be seen that, the reconstruction time instant $t_j$ is in one-to-one correspondence with the decoding time instant $t_k$. The correspondence herein is as follows. A global feature of the target video at a reconstruction time instant $t_1$ may be reconstructed by using a hidden state $h_1$ at a decoding time instant $t_1$; a global feature of the target video at a reconstruction time instant $t_2$ may be reconstructed by using a hidden state $h_2$ at a decoding time instant $t_2$; similarly, a global feature of the target video at a reconstruction time instant $t_n$ may be reconstructed by using a hidden state $h_n$ at a decoding time instant $t_n$. It may be known from the above, a global feature of the target video at the reconstruction time instant $t_j$ may be reconstructed by using the hidden state $h_k$ at any decoding time instant $t_k$. In this case, $j$ and $k$ have the same value. In the embodiment of the present disclosure, the hidden state sequence H of the decoding stage may be integrated based on the average feature mechanism, and the global expression information of the natural sentence predicted by the decoder may be obtained, which is shown in the following Formula (5).

$$\phi(H) = \frac{1}{n}\sum_{j=1}^{n} h_j \qquad (5)$$

In Formula (5), $\phi(H)$ indicates an average feature of the hidden states of the decoder at the decoding time instants.

Second, $\phi(H)$, the hidden state $h_j$ of the decoding stage at the current reconstruction time instant $t_j$, and a hidden state $z_{j-1}$ of the reconstructor at a previous reconstruction time instant $t_{j-1}$ are inputted to the LSTM network of the reconstructor, to obtain a hidden state $z_j$ of the reconstructor at the current reconstruction time instant $t_j$. For this process, one may refer to the following Formula (6):

$$\begin{pmatrix} i_{t_j} \\ f_{t_j} \\ o_{t_j} \\ g_{t_j} \end{pmatrix} = \begin{pmatrix} \sigma \\ \sigma \\ \sigma \\ \tanh \end{pmatrix} T \begin{pmatrix} h_j \\ z_{j-1} \\ \phi(H) \end{pmatrix}$$
$$m_{t_j} = f_{t_j} \odot m_{t_{j-1}} + i_{t_j} \odot g_{t_j}$$
$$z_j = o_{t_j} \odot \tanh(m_{t_j}) \qquad (6)$$

In the foregoing Formula (6), $i_{t_j}$, $f_{t_j}$, $o_{t_j}$, and $g_{t_j}$ are respectively referred to as an input gate, a forget gate, a memory gate, and an output gate; tanh() indicates a hyperbolic tangent function; $\sigma$ indicates a common activation function, such as the sigmoid function, in a neural network; $z_j$ not only indicates the hidden state of the reconstructor at the current reconstruction time instant $t_j$, but also indicates the global feature of the target video reconstructed by the reconstructor at the current reconstruction time instant $t_j$.

In an embodiment, the reconstructor may reconstruct local features of the target video.

First, the reconstructor needs to reconstruct a feature, that is, a frame feature, of each video frame in the target video including m (m is a positive integer) frames. The local features of the target video include the frame feature. In other words, when the local features of the target video are reconstructed, the reconstructor needs to perform m times of reconstruction processing. In this case, it is assumed that a reconstruction time instant is $t_j$, where $j$ is a positive integer, and $1 \leq j \leq m$. It is assumed that the reconstructor obtains a frame feature $z_1$ through reconstruction at a reconstruction time instant $t_1$, obtains a frame feature $z_2$ through reconstruction at a reconstruction time instant $t_2$, and so on, and the reconstructor obtains a frame feature $z_m$ through reconstruction at a reconstruction time instant $t_m$. The hidden state sequence of the decoding stage is transformed based on the temporal attention mechanism. The transformation is performed as follows. At each reconstruction time instant, once the reconstructor performs reconstruction of a frame feature, the hidden state sequence of the decoder is transformed once according to the temporal attention mechanism. In this process, local expression information of the natural sentence obtained by the decoder through prediction may be obtained, that is, text information $\mu_{t_j}$ at the current reconstruction time instant $t_j$ is obtained, where

$$\mu_{t_j} = \sum_{j=1}^{m} \beta_j^{t_j} h_j \qquad \sum_{j=1}^{m} \beta_j^{t_j} = 1 \tag{7}$$

Second, $\mu_{t_j}$, the hidden state $z_{j-1}$ of the reconstructor at the previous reconstruction time instant $t_{j-1}$ are inputted to the LSTM network of the reconstructor, and a hidden state $z_j$ of the reconstructor at the current reconstruction time instant $t_j$ is obtained. The process may be represented by the following Formula (8):

$$\begin{pmatrix} i_{t_j} \\ f_{t_j} \\ o_{t_j} \\ g_{t_j} \end{pmatrix} = \begin{pmatrix} \sigma \\ \sigma \\ \sigma \\ \tanh \end{pmatrix} T \begin{pmatrix} \mu_{t_j} \\ z_{t_{j-1}} \end{pmatrix}$$
$$m_{t_j} = f_{t_j} \odot m_{t_{j-1}} + i_{t_j} \odot g_{t_j}$$
$$z_{t_j} = o_{t_j} \odot \tanh(m_{t_j}) \tag{8}$$

In the foregoing Formula (8), $z_{t_j}$ not only indicates the hidden state of the reconstructor at the current reconstruction time instant $t_j$, but also indicates one frame feature of the target video reconstructed by the reconstructor at the current reconstruction time instant $t_j$.

4. Optimization stage:

A feature of the target video is compared with a feature of the original video that is originally inputted. If a difference between the two features is relatively small (for example, less than a preset threshold), it is indicated that the natural sentence generated by the decoder provides a relatively accurate description of video content of the original video. Conversely, if the difference between the two features is relatively large (for example, greater than the preset threshold), it is indicated that the natural sentence generated by the decoder does not provide an adequately accurate description of video content of the original video. In such a scenario, processing parameters of the decoder and/or the reconstructor may be optimized and trained based on the difference between the two features, so that the difference between the two features is gradually reduced. In this process, the generation of the natural sentence by the decoder is constrained by utilizing backward information from the natural language to the video content. With continuous optimization, an entire framework network of the video processing system tends to be stable, and the generated natural sentence describes the video content more accurately.

In an embodiment, the server may construct a global loss function $L_{rec}^{g}$ of the reconstructor by using a Euclidean distance between the global feature of the original video and the global feature of the target video, which is represented by:

$$L_{rec}^{g} = \varphi(\phi(V), \phi(Z)) \quad (9).$$

In the foregoing Formula (9), Z indicates a global feature sequence of an inputted video that is reconstructed, where $Z = \{z_1, z_2, ... z_n\}$, and $\varphi()$ indicates calculating the Euclidean distance.

In an embodiment, the server may construct a local loss function $L_{rec}^{l}$ of the reconstructor by using an average Euclidean distance between video frame features of the constructed target video and frame features of the original video, which is represented by:

$$L_{rec}^{l} = \frac{1}{m} \sum_{i=1}^{m} \varphi(z_i, v_i) \quad (10)$$

A difference function of the entire video processing system is formed by a loss function of the decoder and a loss function of the reconstructor, so the difference function of the entire video processing system may be obtained as follows:

$$L(\theta, \theta_{rec}) = \sum_{i=1}^{n} (-\log P(S_i \mid V_i; \theta)) + \lambda L_{rec}(V, Z; \theta_{rec}) \quad (11)$$

In the foregoing Formula (11), $\theta_{rec}$ indicates a processing parameter of the reconstructor; $\lambda$ indicates an empirical parameter for balancing the impact of a loss of the reconstructor on the entire video processing system, and the value of $\lambda$ may be set according to actual experience. When the global feature of the target video is reconstructed according to experience, $L_{rec}(V,Z;\theta_{rec})$ in the foregoing Formula (11) is replaced with Formula (9), and the value of $\lambda$ may be set as 0.2. When the local features of the target video are reconstructed, $L_{rec}(V,Z;\theta_{rec})$ in the foregoing Formula (11) is replaced with Formula (10), and the value of $\lambda$ may be set as 0.1.

In conclusion, the foregoing Formula (11) reflects a difference between the feature of the original video and the feature of the target video. At the optimization stage, the entire framework network of the video processing system is optimized and trained, to constantly reduce the difference reflected in Formula (11), thereby constraining the generation of the natural sentence, so that the description accuracy of the natural sentence becomes higher. It may be known from Formula (11) that the difference is mainly affected by the processing parameter $\theta$ of the decoder and the processing parameter $\theta_{rec}$ of the reconstructor. At the optimization stage, the processing parameter of the decoder and/or the processing parameter of the reconstructor is trained based on the difference function in the foregoing Formula (11), so that a result of Formula (11) is less than a preset threshold, to reduce the difference.

It should be understood that, according to Formula (11), it may be known that an optimization target of the decoder in the optimization training process is $\min_{\theta} \sum_{i=1}^{n} (-\log P(S_i \mid V_i; \theta))$.

In the embodiment of the present disclosure, encoding and decoding is performed on an original video to obtain the natural sentence by using forward information from video content to a natural sentence, and a video feature of the original video and a hidden state of a decoding stage are obtained by using backward information from the natural sentence to the video content to reconstruct a target video. The framework of a video processing system is optimized based on a difference between the target video and the original video. In this way, a process of generating a natural sentence is constrained by obtaining bilateral information between video content and the natural sentence, so that a description accuracy of the natural sentence is improved, and the quality of the video content understanding service is optimized.

Based on the foregoing description, a video processing method is provided according to an embodiment of the present disclosure. The method may be applied to the video processing system shown in FIG. 2. Referring to FIG. 3, the method may include the following steps S101 to S104.

In step S101, encoding and decoding is performed on an original video by using an encoder and a decoder, to obtain a video feature of the original video and a hidden state of a decoding stage.

In step S102, a video feature of a target video is reconstructed by using a reconstructor according to the hidden state of the decoding stage.

In step S103, a difference between the video feature of the target video and the video feature of the original video is obtained.

In step S104, a processing parameter of at least one of the decoder and the reconstructor is adjusted according to the difference, to reduce the difference.

In the embodiment of the present disclosure, encoding and decoding is performed on an original video to obtain the natural sentence by using forward information from video content to a natural sentence, and a video feature of the original video and a hidden state of a decoding stage are obtained by using backward information from the natural sentence to the video content to reconstruct a target video. The framework of a video processing system is optimized based on a difference between the target video and the original video. In this way, a process of generating a natural sentence is constrained by obtaining bilateral information between video content and the natural sentence, so that a description accuracy of the natural sentence is improved, and the quality of the video content understanding service is optimized.

Another video processing method is provided according to an embodiment of the present disclosure. The method may be applied to the video processing system shown in FIG. 2. Referring to FIG. 4, the method may include the following steps S201 to S211.

In step S201, an encoder is invoked to extract frame features of an original video.

In step S202, the extracted frame features are merged according to a time sequence of video frames of the original video, to generate a video feature of the original video.

In step S203, hidden states of a decoder at multiple decoding time instants are obtained.

Step S203 may include the following steps s11 and s12.

In step s11, the frame features in the video feature of the original video are integrated based on an average feature mechanism or a temporal attention mechanism at each decoding time instant, to obtain an integrated feature.

In step s12, the decoder is invoked to perform decoding processing on the integrated feature, to obtain the hidden states of the decoder at the multiple decoding time instants.

In step S204, the obtained hidden states at the multiple decoding time instants are merged according to a time sequence of the decoding time instants, to obtain the hidden state of the decoding stage.

In step S205, an average feature mechanism is applied to the hidden state of the decoding stage, to obtain corresponding global expression information.

In step S206, a reconstructor is invoked to reconstruct a global feature of a target video according to the global expression information and the hidden state of the decoding stage.

In step S207, a first Euclidean distance between the global feature of the target video and the video feature of the original video is calculated.

In step S208, a global loss function of the reconstructor is constructed according to the first Euclidean distance.

In step S209, a loss function of the decoder is obtained.

In step S210, a global difference function is constructed according to the loss function of the decoder and the global loss function of the reconstructor, and a difference between a video feature of the target video and the video feature of the original video is determined according to the global difference function.

In step S211, a processing parameter of at least one of the decoder and the reconstructor is adjusted according to the difference, to reduce the difference.

In the embodiment of the present disclosure, encoding and decoding is performed on an original video to obtain the natural sentence by using forward information from video content to a natural sentence, and a video feature of the original video and a hidden state of a decoding stage are obtained by using backward information from the natural sentence to the video content to reconstruct a target video. The framework of a video processing system is optimized based on a difference between the target video and the original video. In this way, a process of generating a natural sentence is constrained by obtaining bilateral information between video content and the natural sentence, so that a description accuracy of the natural sentence is improved, and the quality of the video content understanding service is optimized.

Still another video processing method is provided according to an embodiment of the present disclosure. The method may be applied to the video processing system shown in FIG. 2. Referring to FIG. 5, the method may include the following steps S301 to S311.

In step S301, an encoder is invoked to extract frame features of an original video.

In step S302, the extracted frame features are merged according to a time sequence of video frames of the original video, to generate a video feature of the original video.

In step S303, hidden states of a decoder at multiple decoding time instants are obtained.

In step S304, the obtained hidden states at the multiple decoding time instants are merged according to a time sequence of the decoding time instants, to obtain the hidden state of the decoding stage.

In step S305, a temporal attention mechanism is applied to a hidden state of the decoder at each decoding time instant, to obtain corresponding local expression information.

In step S306, a reconstructor is invoked to reconstruct local features of a target video according to the local expression information and the hidden state of the decoder at each decoding time instant.

In step S307, second Euclidean distances between the local features of the target video and the video feature of the original video are calculated.

In step S308, a local loss function of the reconstructor is constructed according to the second Euclidean distances.

In step S309, a loss function of the decoder is obtained.

In step S310, a local difference function is constructed according to the loss function of the decoder and the local loss function of the reconstructor, and a difference between a video feature of the target video and the video feature of the original video is determined according to the local difference function.

In step S311, a processing parameter of at least one of the decoder and the reconstructor is adjusted according to the difference, to reduce the difference.

In the embodiment of the present disclosure, encoding and decoding is performed on an original video to obtain the natural sentence by using forward information from video content to a natural sentence, and a video feature of the original video and a hidden state of a decoding stage are obtained by using backward information from the natural sentence to the video content to reconstruct a target video. The framework of a video processing system is optimized based on a difference between the target video and the original video. In this way, a process of generating a natural sentence is constrained by obtaining bilateral information between video content and the natural sentence, so that a description accuracy of the natural sentence is improved, and the quality of the video content understanding service is optimized.

Although steps of the flowcharts in FIG. 3 to FIG. 5 are displayed sequentially according to arrows, the steps are unnecessarily performed according to an order indicated by arrows. Unless explicitly specified in the present disclosure, the sequence of the steps is not strictly limited, and the steps may be performed in other sequences. In addition, at least some steps in FIG. 3 to FIG. 5 may include multiple substeps or multiple stages. The substeps or the stages are unnecessarily performed at a same time instant, and instead may be performed at different time instants. The substeps or the stages are unnecessarily performed in sequence, and instead may be performed in turn or alternately with another step or at least some of substeps or stages of another step.

Based on descriptions in the embodiments of the video processing system and the video processing method, a video processing apparatus is further provided according to an embodiment of the present disclosure. The video processing apparatus may be a computer program (including program codes) run in a server. The video processing apparatus may be applied to the video processing methods in the embodiments shown in FIG. 3 to FIG. 5, so as to perform the steps in the video processing methods. Referring to FIG. 6, the video processing apparatus includes: a processing unit 101, a reconstruction unit 102, a difference obtaining unit 103 and an optimization unit 104.

The processing unit 101 is configured to perform encoding and decoding on an original video by using an encoder and a decoder, to obtain a video feature of the original video and a hidden state of a decoding stage.

The reconstruction unit 102 is configured to reconstruct a video feature of a target video by using a reconstructor according to the hidden state of the decoding stage.

The difference obtaining unit 103 is configured to obtain a difference between the video feature of the target video and the video feature of the original video.

The optimization unit 104 is configured to adjust a processing parameter of at least one of the decoder and the reconstructor according to the difference, to reduce the difference.

In an embodiment, the processing unit 101 is configured to: invoke the encoder to extract frame features of the original video; merge the extracted frame features according to a time sequence of video frames of the original video, to generate the video feature of the original video; obtain hidden states of the decoder at multiple decoding time instants; and merge the obtained hidden states at the multiple decoding time instants according to a time sequence of the decoding time instants, to obtain the hidden state of the decoding stage.

In an embodiment, the processing unit 101 is configured to: integrate the frame features in the video feature of the original video based on an average feature mechanism or a temporal attention mechanism at each decoding time instant, to obtain an integrated feature; and invoke the decoder to perform decoding processing on the integrated feature, to obtain the hidden states of the decoder at the multiple decoding time instants.

In an embodiment, the video feature of the target video includes a global feature of the target video. The reconstruction unit 102 is configured to: apply an average feature mechanism to the hidden state of the decoding stage, to obtain corresponding global expression information; and invoke the reconstructor to reconstruct the global feature of the target video according to the global expression information and the hidden state of the decoding stage.

In an embodiment, the difference obtaining unit 103 is configured to: calculate a first Euclidean distance between the global feature of the target video and the video feature of the original video; construct a global loss function of the reconstructor according to the first Euclidean distance; obtain a loss function of the decoder; construct a global difference function according to the loss function of the decoder and the global loss function of the reconstructor; and determine the difference between the video feature of the target video and the video feature of the original video according to the global difference function.

In an embodiment, the reconstruction unit 102 is configured to: apply a temporal attention mechanism to a hidden state of the decoder at each decoding time instant, to obtain corresponding local expression information; and invoke the reconstructor to reconstruct local features of an inputted video according to the local expression information and the hidden state of the decoder at each decoding time instant.

In an embodiment, the difference obtaining unit 103 is configured to: calculate second Euclidean distances between the local features of the target video and the video feature of the original video; construct a local loss function of the reconstructor according to the second Euclidean distances; obtain a loss function of the decoder; and determine the difference between the video feature of the target video and the video feature of the original video according to a local difference function.

In an embodiment, the optimization unit 104 is configured to: optimize and update the processing parameter of the decoder according to the difference; and/or optimize and update the processing parameter of the reconstructor according to the difference.

In an embodiment, the processing unit is further configured to: determine words corresponding to the original video by using the decoder according to the hidden state of the decoding stage; and merge the words according to the time sequence of the decoding time instants by using the decoder to form a natural sentence for describing the original video.

According to an embodiment of the present disclosure, steps S101 to S104 involved in the video processing method shown in FIG. 3 may be performed by the units in the video processing apparatus shown in FIG. 6. For example, steps S101, S102, S103, and S104 shown in FIG. 3 may be respectively performed by the processing unit 101, the reconstruction unit 102, the difference obtaining unit 103, and the optimization unit 104 shown in FIG. 6.

According to an embodiment of the present disclosure, steps S201 to S211 involved in the video processing method shown in FIG. 4 may be performed by the units in the video processing apparatus shown in FIG. 6. For example, steps S201 to S204, S205 to S206, S207 to S210, and S211 shown in FIG. 4 may be respectively performed by the processing unit 101, the reconstruction unit 102, the difference obtaining unit 103, and the optimization unit 104 shown in FIG. 6.

According to an embodiment of the present disclosure, steps S201 to S211 involved in the video processing method shown in FIG. 5 may be performed by the units in the video processing apparatus shown in FIG. 6. For example, steps S301 to S304, S305 to S306, S307 to S310, and S311 shown in FIG. 5 may be respectively performed by the processing unit 101, the reconstruction unit 102, the difference obtaining unit 103, and the optimization unit 104 shown in FIG. 6.

In an embodiment, the units in the video processing apparatus shown in FIG. 6 may be combined into one or multiple other units, or one (or more) of the units herein may be divided into multiple smaller functional units. In this way, same operations can be implemented without influencing implementation of the technical effects of the embodiments of the present disclosure. The foregoing units are divided based on logical functions. During actual application, a function of one unit may be implemented by multiple units, or functions of multiple units are implemented by one unit. In other embodiments of the present disclosure, the video processing apparatus may further include other units. During an actual application, the functions may also be cooperatively implemented by other units and may be cooperatively implemented by multiple units.

In the embodiment of the present disclosure, encoding and decoding is performed on an original video to obtain the natural sentence by using forward information from video content to a natural sentence, and a video feature of the original video and a hidden state of a decoding stage are obtained by using backward information from the natural sentence to the video content to reconstruct a target video. The framework of a video processing system is optimized based on a difference between the target video and the original video. In this way, a process of generating a natural sentence is constrained by obtaining bilateral information between video content and the natural sentence, so that a description accuracy of the natural sentence is improved, and the quality of the video content understanding service is optimized.

Based on descriptions in the embodiments of the video processing system, the video processing method, and the video processing apparatus, a video retrieval method is further provided according to an embodiment of the present disclosure. Referring to FIG. 7, the method may include the following steps S401 to S404.

In step S401, a video retrieval request is received. The video retrieval request carries retrieval key information.

During an actual application, the video processing system shown in FIG. 2 may be deployed in a backend server of a video website. The video processing system can predict and generate natural sentences with high description accuracy for all videos in the video website, thereby providing a high-quality video content understanding service (for example, a video retrieval service) for the video website. In an embodiment, the video website may provide a video retrieval entrance. Referring to FIG. 8a, the video website is provided with a video retrieval shortcut button (a dashed-line box shown in FIG. 8a). When the video retrieval shortcut button is triggered (for example, clicked or selected), a video retrieval interface shown in FIG. 8b is displayed. The video retrieval interface includes an input interface, and a user may input retrieval key information into the input interface, and clicks a "Search" button to initiate a video retrieval request. The video retrieval request carries the retrieval key information inputted by the user, so that a front end (for example, a browser client) of the video website transmits the video retrieval request to the backend server, and the backend server provides a video retrieval service to the user based on the video processing system shown in FIG. 2. Referring to FIG. 8b again, the input interface in the video retrieval interface may include a text input interface and a voice input interface. Retrieval key information inputted through the text input interface is a retrieval text. For example, the retrieval text is characters such as a keyword "roast" or "running". Retrieval key information inputted through the voice input interface is retrieval audio. For example, the retrieval audio is voice in a to-be-retrieved video uploaded by the user or an audio such as recorded voice of the user.

In step S402, a video database is searched for a natural sentence matching the retrieval key information. The video database includes a video and a natural sentence corresponding to the video, and the natural sentence corresponding to the video is obtained through processing by using the video processing method for generating a natural sentence.

The video database includes all the videos in the video website. Specifically, the video database includes at least one video category, at least one video in each video category, and a natural sentence corresponding to each video. The natural sentence corresponding to each video is obtained through prediction by the video processing system. The natural sentence corresponding to each video is obtained through processing by using the video processing method for generating a natural sentence. The video database may be represented by the following table:

Table 1: Video database

| Video | Video category | Natural sentence |
|---|---|---|
| Video-1 | TV shows | Natural sentence 1 |
| Video-2 | Movies | Natural sentence 2 |
| Video-3 | Variety shows | Natural sentence 3 |
| ... | ... | ... |

Video categories may be set by the video website according to various attributes. For example, video categories shown in Table 1 may be set according to content attributes. Alternatively, video categories such as Chinese mainland, Hong Kong & Taiwan, Europe & US, and Japan & Korea may be set according to regional attributes. Each video category includes a tag set. The tag set may include multiple tags, and the tags may be content tags of videos in the video category, tags manually set on the backend, comment tags of users, or the like. In the video database, the videos may be classified according to a natural sentence of each video. Specifically, a natural sentence of a video is sequentially formed by multiple words, so that the natural sentence of the video may be indicated by a word set. For example, the natural sentence 1 corresponding to the Video-1 may be represented by {word 1, word 2, ..., word n}. Because each video category has a corresponding tag set, the videos can be classified by calculating matching degrees between word sets corresponding to natural sentences of the videos and tag sets of the video categories.

As described above, the retrieval key information may include a retrieval text or a retrieval audio. In an embodiment, if the retrieval key information is a retrieval text, the retrieval text may be represented by a keyword set in practice, {keyword 1, keyword 2, ..., and keyword n}. For example, the retrieval text includes the characters "roast" and "running", and a keyword set corresponding to the retrieval text is {roast, running}. In this case, similarities between the keyword set and the word sets corresponding to the natural sentences of the videos shown in Table 1 may be separately calculated. If a similarity between the keyword set and a word set corresponding to a natural sentence is greater than a preset threshold, it is indicated that the two sets match. Otherwise, the two sets do not match. In this way, one or more natural sentences matching the retrieval key information may be found from the video database.

In an embodiment, in a case that the retrieval key information is a retrieval audio, for convenience of subsequent processing, an audio-to-text technology may be first used, to convert the retrieval audio into a retrieval text. One or more natural sentences matching the retrieval key information may then be found from the video database according to the matching method in the foregoing implementation. This implementation may be used to help the visually impaired to perform video retrieval, thereby improving the intelligence and practicality of a video retrieval function of the video website.

In step S403, a matching video corresponding to the natural sentence matching the retrieval key information is obtained.

In step S404, the matching video is outputted.

In steps S403 and S404, for example, if a similarity between the retrieval key information and the natural sentence 1 is greater than a preset threshold and a similarity between the retrieval key information and the natural sentence 2 is also greater than the preset threshold, the retrieval key information matches both the natural sentence 1 and the natural sentence 2. Therefore, it may be obtained according to Table 1 that matching videos include Video-1 and Video-2. Further, as shown in a retrieval result interface in FIG. 8c, the matching videos Video-1 and Video-2 are displayed in the retrieval result interface. It may be understood that, there may be one or more matching videos. The matching videos may be outputted in a descending order of similarities between natural sentences of the matching videos and the retrieval key information or may be outputted in random order.

In the embodiment of the present disclosure, a natural sentence with a higher accuracy can be predicted for a video based on an optimized framework of a video processing system, and a matching video meeting a video retrieval requirement is obtained according to the natural sentence, thereby providing a high-quality video retrieval service to a user, and thus improving the intelligence and practicality of the video processing system.

Based on the video retrieval method shown in the foregoing embodiment, a video retrieval apparatus is further provided according to an embodiment of the present disclosure. The video retrieval apparatus may be a computer program (including program codes) run in a server. The video retrieval apparatus may be applied to the video retrieval method in the embodiment shown in FIG. 7, so as to perform the steps in the video retrieval method. Referring to FIG. 9, the video retrieval apparatus includes: a receiving unit 201, a retrieval unit 202, an obtaining unit 203 and an output unit 204.

The receiving unit 201 is configured to receive a video retrieval request. The video retrieval request carries retrieval key information.

The retrieval unit 202 is configured to search a video database for a natural sentence matching the retrieval key information. The video database includes a video and a natural sentence corresponding to the video, and the natural sentence corresponding to the video is obtained through processing by using the video processing apparatus for generating a natural sentence.

The obtaining unit 203 is configured to obtain a matching video corresponding to the natural sentence matching the retrieval key information.

The output unit 204 is configured to output the matching video.

According to an embodiment of the present disclosure, steps S401 to S404 involved in the video retrieval method shown in FIG. 7 may be performed by the units in the video retrieval apparatus shown in FIG. 9. For example, steps S401, S402, S403, and S404 shown in FIG. 7 may be respectively performed by the receiving unit 201, the retrieval unit 202, the obtaining unit 203, and the output unit 204 shown in FIG. 9.

According to another embodiment of the present disclosure, units in the video retrieval apparatus shown in FIG. 9 may be combined into one or multiple other units, or one (or more) of the units herein may be divided into multiple smaller functional units. In this way, same operations can be implemented without influencing implementation of the technical effects of the embodiments of the present disclosure. The foregoing units are divided based on logical functions. During an actual application, a function of one unit may be implemented by multiple units, or functions of multiple units are implemented by one unit. In other embodiments of the present disclosure, the video retrieval apparatus may include other units. During an actual application, the functions may also be cooperatively implemented by other units and may be cooperatively implemented by multiple units.

In the embodiment of the present disclosure, a natural sentence with a higher accuracy can be predicted for a video based on an optimized framework of a video processing system, and a matching video meeting a video retrieval requirement is obtained according to the natural sentence, thereby providing a high-quality video retrieval service to a user, and thus improving the intelligence and practicality of the video processing system.

Based on the video processing system, the video processing method, and the video retrieval method shown in the foregoing embodiments, a server is further provided according to an embodiment of the present disclosure. The server may be a backend server of a video website. Referring to FIG. 10, the server includes at least the video processing system shown in FIG. 2, that is, includes an encoder, a decoder, and a reconstructor. Further, the server further includes a processor, a communications interface, and a computer storage medium. The processor, the communications interface, and the computer storage medium of the server may be connected by a bus or in other manners. In this embodiment of the present disclosure shown in FIG. 10, components are connected via a bus.

The communications interface is a medium implementing interaction and information exchange between the server and an external device (for example, a terminal device). The processor (or referred to as a central processing unit (CPU)) is a computing core and a control core of the server, is configured to implement one or more instructions, and is specifically configured to load and execute one or more instructions to implement a corresponding method procedure and a corresponding function. In an implementation of the embodiment of the present disclosure, the processor is configured to: control the video processing system to perform encoding and decoding on an original video, reconstruct a target video, obtain a difference between the target video and the original video, optimize the framework of the video processing system according to the difference, and the like. In another implementation of the embodiment of the present disclosure, the processor is configured to: search a video database for a matching natural sentence according to retrieval key information carried in a video retrieval request, obtain and output a matching video corresponding to the matching natural sentence, and the like. The computer storage medium is a memory device in the server and is configured to store programs and data. The computer storage medium herein may include an internal storage medium of the server and may further include an expanded storage medium supported by the server. The computer storage medium provides a storage space storing an operating system of the server. In addition, the storage space further stores one or more instructions suitable for being loaded and executed by the processor, and the instructions may be one or more computer programs (including program codes). The computer storage medium herein may be a high speed random access memory (RAM) or a non-volatile memory, for example, at least one magnetic disk memory. In an embodiment, the computer storage medium may be at least one computer storage medium located far away from the foregoing processor.

In an embodiment, the computer storage medium stores one or more first instructions. The processor loads and executes the one or more first instructions stored in the computer storage medium, to implement corresponding steps in the method procedures shown in FIG. 3 to FIG. 5. During a specific implementation, the one or more first instructions in the computer storage medium are loaded and executed by the processor to perform the following steps: performing encoding and decoding on an original video by using an encoder and a decoder, to obtain a video feature of the original video and a hidden state of a decoding stage; reconstructing a video feature of a target video by using a reconstructor according to the hidden state of the decoding stage; obtaining a difference between the video feature of the target video and the video feature of the original video; and adjusting a processing parameter of at least one of the decoder and the reconstructor according to the difference, to reduce the difference.

In an embodiment, in a process in which the processor loads the one or more first instructions in the computer storage medium to perform encoding and decoding on an original video by using an encoder and a decoder, to obtain a video feature of the original video and a hidden state of a decoding stage, the processor performs the following operations: invoking the encoder to extract frame features of the original video; merging the extracted frame features according to a time sequence of video frames of the original video, to generate the video feature of the original video; obtaining hidden states of the decoder at multiple decoding time instants; and merging the obtained hidden states at the multiple decoding time instants according to a time sequence of the decoding time instants, to obtain the hidden state of the decoding stage.

In an embodiment, in a process in which the processor loads the one or more first instructions in the computer storage medium to obtain hidden states of the decoder at multiple decoding time instants, the processor performs the following operations: integrating the frame features in the video feature of the original video based on an average feature mechanism or a temporal attention mechanism at each decoding time instant, to obtain an integrated feature; and invoking the decoder to perform decoding on the integrated feature, to obtain the hidden states of the decoder at the multiple decoding time instants.

In an embodiment, the video feature of the target video includes a global feature of the target video. In a process in which the processor loads the one or more first instructions in the computer storage medium to reconstruct a video feature of a target video by using a reconstructor according to the hidden state of the decoding stage, the processor performs the following operations: applying an average feature mechanism to the hidden state of the decoding stage, to obtain corresponding global expression information; and invoking the reconstructor to reconstruct the global feature of the target video according to the global expression information and the hidden state of the decoding stage.

In an embodiment, in a process in which the processor loads the one or more first instructions in the computer storage medium to obtain a difference between the video feature of the target video and the video feature of the original video, the processor performs the following operations: calculating a first Euclidean distance between the global feature of the target video and the video feature of the original video; constructing a global loss function of the reconstructor according to the first Euclidean distance; obtaining a loss function of the decoder; constructing a global difference function according to the loss function of the decoder and the global loss function of the reconstructor; and determining the difference between the video feature of the target video and the video feature of the original video according to the global difference function.

In an embodiment, the video feature of the target video includes local features of the target video. In a process in which the processor loads the one or more first instructions in the computer storage medium to reconstruct a video feature of a target video by using a reconstructor according to the hidden state of the decoding stage, the processor performs the following operations: applying a temporal attention mechanism to a hidden state of the decoder at each decoding time instant, to obtain corresponding local expression information; and invoking the reconstructor to reconstruct the local features of the target video according to the local expression information and the hidden state of the decoder at each decoding time instant.

In an embodiment, in a process in which the processor loads the one or more first instructions in the computer storage medium to obtain a difference between the video feature of the target video and the video feature of the original video, the processor performs the following operations: calculating second Euclidean distances between the local features of the target video and the video feature of the original video; constructing a local loss function of the reconstructor according to the second Euclidean distances; obtaining a loss function of the decoder; constructing a local difference function according to the loss function of the decoder and the local loss function of the reconstructor; and determining the difference between the video feature of the target video and the video feature of the original video according to the local difference function.

In an embodiment, in a process in which the processor loads the one or more first instructions in the computer storage medium to adjust a processing parameter of at least one of the decoder and the reconstructor according to the difference, to reduce the difference, the processor performs the following operations: optimizing and updating the processing parameter of the decoder according to the difference; and/or optimizing and updating the processing parameter of the reconstructor according to the difference.

In an embodiment, the processor loads the one or more first instructions in the computer storage medium to perform the following operations: determining words corresponding to the original video by using the decoder according to the hidden state of the decoding stage; and merging the words according to the time sequence of the decoding time instants by using the decoder to form a natural sentence for describing the original video.

In the embodiment of the present disclosure, encoding and decoding is performed on an original video to obtain the natural sentence by using forward information from video content to a natural sentence, and a video feature of the original video and a hidden state of a decoding stage are obtained by using backward information from the natural sentence to the video content to reconstruct a target video. The framework of a video processing system is optimized based on a difference between the target video and the original video. In this way, a process of generating a natural sentence is constrained by obtaining bilateral information between video content and the natural sentence, so that a description accuracy of the natural sentence is improved, and the quality of the video content understanding service is optimized.

In an embodiment, the computer storage medium stores one or more second instructions. The processor loads and executes the one or more second instructions stored in the computer storage medium, to implement corresponding steps in the method procedure shown in FIG. 7. During specific implementation, the one or more second instructions in the computer storage medium are loaded and executed by the processor to perform the following steps: receiving a video retrieval request, the video retrieval request carrying retrieval key information; searching a video database for a natural sentence matching the retrieval key information, the video database including a video and a natural sentence corresponding to the video, and the natural sentence corresponding to the video being obtained by performing the video processing method for generating a natural sentence; obtaining a matching video corresponding to the natural sentence matching the retrieval key information; and outputting the matching video.

In an embodiment, the retrieval key information includes a retrieval text or a retrieval audio. In a case that the retrieval key information is a retrieval audio and before the processor loads the one or more second instructions in the computer storage medium to search a video database for a natural sentence matching the retrieval key information, the processor further performs the following step: converting the retrieval audio into a retrieval text.

In an embodiment, a non-volatile computer-readable storage medium storing computer-readable instructions is provided according to the present disclosure. The computer-readable instructions, when being executed by one or more processors, cause the one or more processors to perform operations in the foregoing video processing method and/or video retrieval method. The operations in the video processing method and the video processing method herein may be steps in the foregoing video processing method and/or video retrieval method in the above embodiments.

In an embodiment, a server including a memory and a processor is provided according to the present disclosure. The memory stores computer-readable instructions, and the computer-readable instructions, when being executed by the processor, cause the processor to perform operations in the foregoing video processing method and/or video retrieval method. The operations in the video processing method and the video processing method herein may be steps in the foregoing video processing method and/or video retrieval method in the above embodiments.

In this embodiment, a natural sentence with a higher accuracy can be predicted for a video based on an optimized framework of a video processing system, and a matching video meeting a video retrieval requirement is obtained according to the natural sentence, thereby providing a high-quality video retrieval service to a user, and thus improving the intelligence and practicality of the video processing system.

Preferred embodiments of the present disclosure are described above and are not intended to limit the protection scope of the present disclosure. Therefore, equivalent variations made in accordance with the claims of the present disclosure shall fall within the scope of the present disclosure.

## Claims

1. A video processing method, applied to a video processing system, wherein the video processing system comprises an encoder, a decoder, and a reconstructor, and the method comprises:

   performing encoding and decoding on an original video by using the encoder and the decoder, to obtain a video feature of the original video and a hidden state of a decoding stage;
   reconstructing a video feature of a target video by using the reconstructor according to the hidden state of the decoding stage;
   obtaining a difference between the video feature of the target video and the video feature of the original video; and

adjusting a processing parameter of at least one of the decoder and the reconstructor according to the difference, to reduce the difference.

2. The method according to claim 1, wherein the performing encoding and decoding on an original video by using the encoder and the decoder, to obtain a video feature of the original video and a hidden state of a decoding stage comprises:

invoking the encoder to extract frame features of the original video;
merging the extracted frame features according to a time sequence of video frames of the original video, to generate the video feature of the original video;
obtaining hidden states of the decoder at a plurality of decoding time instants; and
merging the obtained hidden states at the plurality of decoding time instants according to a time sequence of the decoding time instants, to obtain the hidden state of the decoding stage.

3. The method according to claim 2, wherein the obtaining hidden states of the decoder at a plurality of decoding time instants comprises:

integrating the frame features in the video feature of the original video based on an average feature mechanism or a temporal attention mechanism at each decoding time instant, to obtain an integrated feature; and
invoking the decoder to perform decoding on the integrated feature, to obtain the hidden states of the decoder at the plurality of decoding time instants.

4. The method according to claim 1, wherein the video feature of the target video comprises a global feature of the target video, and the reconstructing a video feature of a target video by using the reconstructor according to the hidden state of the decoding stage comprises:

applying an average feature mechanism to the hidden state of the decoding stage, to obtain corresponding global expression information; and
invoking the reconstructor to reconstruct a global feature of the target video according to the global expression information and the hidden state of the decoding stage.

5. The method according to claim 4, wherein the obtaining a difference between the video feature of the target video and the video feature of the original video comprises:

calculating a first Euclidean distance between the global feature of the target video and the video feature of the original video;
constructing a global loss function of the reconstructor according to the first Euclidean distance;
obtaining a loss function of the decoder;
constructing a global difference function according to the loss function of the decoder and the global loss function of the reconstructor; and
determining the difference between the video feature of the target video and the video feature of the original video according to the global difference function.

6. The method according to claim 1, wherein the video feature of the target video comprises local features of the target video, and the reconstructing a video feature of a target video by using the reconstructor according to the hidden state of the decoding stage comprises:

applying a temporal attention mechanism to a hidden state of the decoder at each decoding time instant, to obtain corresponding local expression information; and
invoking the reconstructor to reconstruct the local features of the target video according to the local expression information and the hidden state of the decoder at each decoding time instant.

7. The method according to claim 6, wherein the obtaining a difference between the video feature of the target video and the video feature of the original video comprises:

calculating a second Euclidean distance between each of the local features of the target video and the video feature of the original video;
constructing a local loss function of the reconstructor according to the second Euclidean distance;

obtaining a loss function of the decoder;
constructing a local difference function according to the loss function of the decoder and the local loss function of the reconstructor; and
determining the difference between the video feature of the target video and the video feature of the original video according to the local difference function.

**8.** The method according to any one of claims 1 to 7, further comprising:

determining words corresponding to the original video by using the decoder according to the hidden state of the decoding stage; and
merging the words according to the time sequence of the decoding time instants by using the decoder to form a natural sentence for describing the original video.

**9.** A video retrieval method, comprising:

receiving a video retrieval request, wherein the video retrieval request carries retrieval key information;
searching a video database for a natural sentence matching the retrieval key information, wherein the video database comprises a video and a natural sentence corresponding to the video, and the natural sentence corresponding to the video is obtained by using the video processing method according to claim 8; and
obtaining a matching video corresponding to the natural sentence matching the retrieval key information, and outputting the matching video.

**10.** The video retrieval method according to claim 9, wherein the retrieval key information comprises a retrieval text or a retrieval audio; and
in a case that the retrieval key information is a retrieval audio and before the searching a video database for a natural sentence matching the retrieval key information, the method further comprises: converting the retrieval audio into a retrieval text.

**11.** A video processing apparatus, comprising:

a processing unit, configured to perform encoding and decoding on an original video by using an encoder and a decoder, to obtain a video feature of the original video and a hidden state of a decoding stage;
a reconstruction unit, configured to reconstruct a video feature of a target video by using a reconstructor according to the hidden state of the decoding stage;
a difference obtaining unit, configured to obtain a difference between the video feature of the target video and the video feature of the original video; and
an optimization unit, configured to adjust a processing parameter of at least one of the decoder and the reconstructor according to the difference, to reduce the difference.

**12.** The apparatus according to claim 11, wherein the processing unit is further configured to: invoke the encoder to extract frame features of the original video; merge the extracted frame features according to a time sequence of video frames of the original video, to generate the video feature of the original video; obtain hidden states of the decoder at a plurality of decoding time instants; and merge the obtained hidden states at the plurality of decoding time instants according to a time sequence of the decoding time instants, to obtain the hidden state of the decoding stage.

**13.** The apparatus according to claim 12, wherein the processing unit is further configured to: integrate the frame features in the video feature of the original video based on an average feature mechanism or a temporal attention mechanism at each decoding time instant, to obtain an integrated feature; and invoke the decoder to perform decoding on the integrated feature, to obtain the hidden states of the decoder at the plurality of decoding time instants.

**14.** The apparatus according to claim 11, wherein the video feature of the target video comprises a global feature of the target video, and the reconstruction unit is further configured to: apply an average feature mechanism to the hidden state of the decoding stage, to obtain corresponding global expression information; and invoke the reconstructor to reconstruct a global feature of the target video according to the global expression information and the hidden state of the decoding stage.

**15.** The apparatus according to claim 14, wherein the difference obtaining unit is further configured to: calculate a first Euclidean distance between the global feature of the target video and the video feature of the original video; construct a global loss function of the reconstructor according to the first Euclidean distance; obtain a loss function of the decoder; construct a global difference function according to the loss function of the decoder and the global loss function of the reconstructor; and determine the difference between the video feature of the target video and the video feature of the original video according to the global difference function.

**16.** The apparatus according to claim 11, wherein the video feature of the target video comprises local features of the target video, and the reconstruction unit is further configured to: apply a temporal attention mechanism to a hidden state of the decoder at each decoding time instant, to obtain corresponding local expression information; and invoke the reconstructor to reconstruct the local features of the target video according to the local expression information and the hidden state of the decoder at each decoding time instant.

**17.** The apparatus according to any one of claims 11 to 16, wherein the processing unit is further configured to: determine words corresponding to the original video by using the decoder according to the hidden state of the decoding stage; and merge the words according to the time sequence of the decoding time instants by using the decoder to form a natural sentence for describing the original video.

**18.** A video retrieval apparatus, comprising:

a receiving unit, configured to receive a video retrieval request, wherein the video retrieval request carries retrieval key information;
a retrieval unit, configured to search a video database for a natural sentence matching the retrieval key information, wherein the video database comprises a video and a natural sentence corresponding to the video, and the natural sentence corresponding to the video is obtained by using the video processing apparatus according to claim 17;
an obtaining unit, configured to obtain a matching video corresponding to the natural sentence matching the retrieval key information; and
an output unit, configured to output the matching video.

**19.** A non-volatile computer-readable storage medium, storing computer-readable instructions, wherein the computer-readable instructions, when being executed by one or more processors, cause the one or more processors to perform operations in the method according to any one of claims 1 to 10.

**20.** A server, comprising a memory and a processor, wherein the memory stores computer-readable instructions, and the computer-readable instructions, when being executed by the processor, cause the processor to perform operations in the method according to any one of claims 1 to 10.

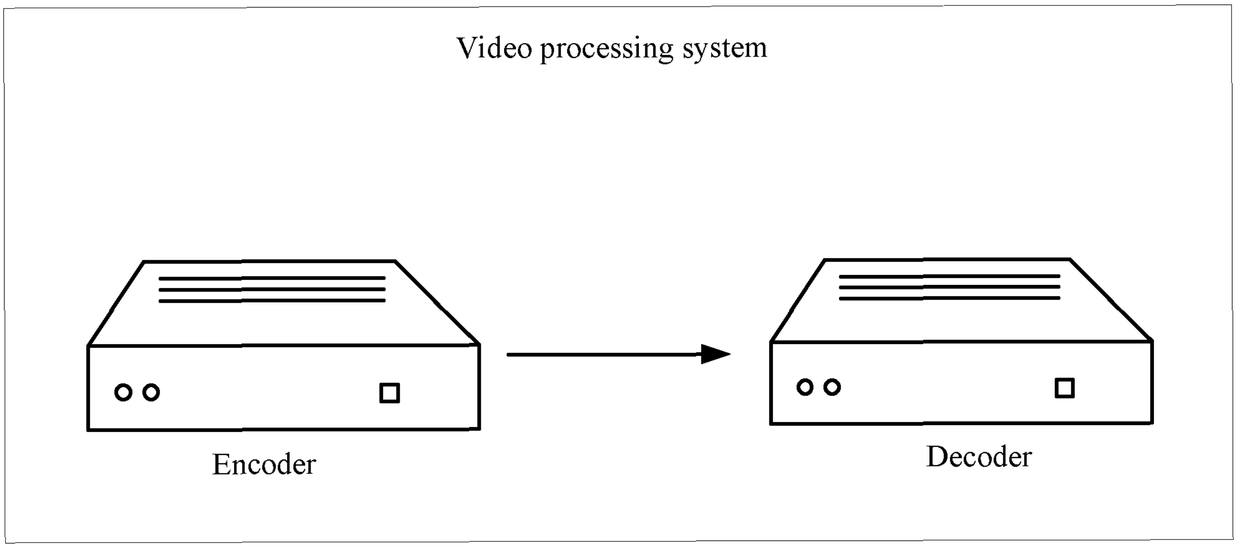
Video processing system
Encoder
Decoder

FIG. 1

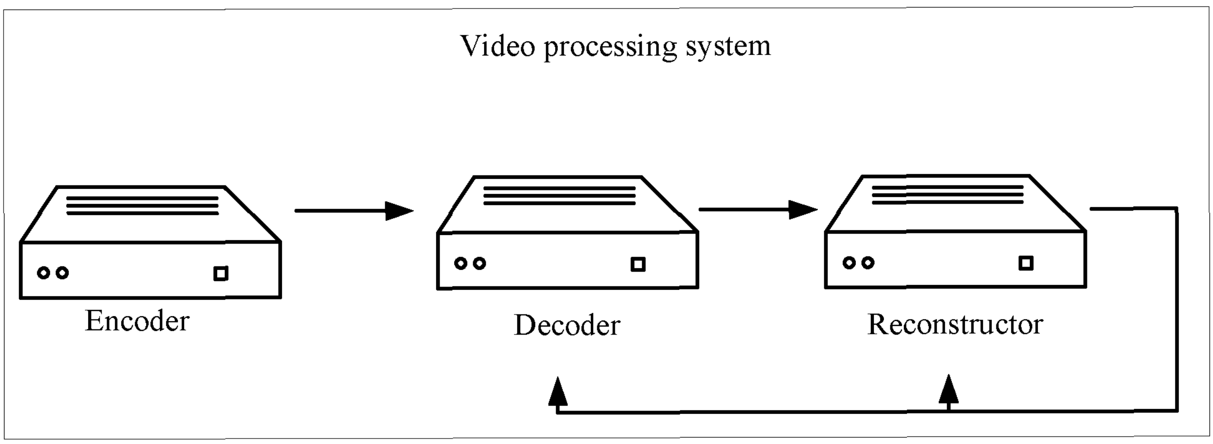
Video processing system
Encoder
Decoder
Reconstructor

FIG. 2

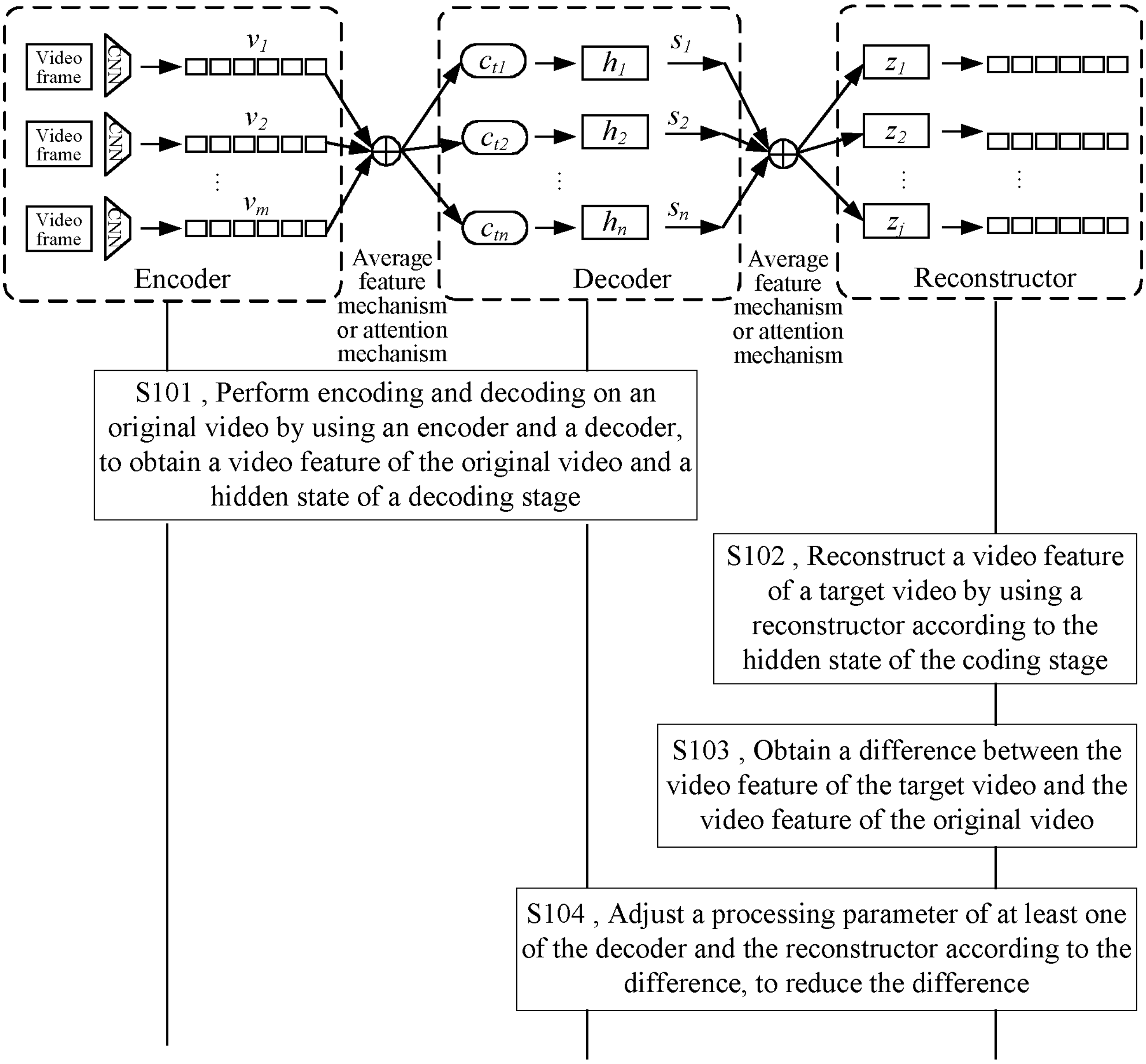
Video frame
CNN
$v_1$
$v_2$
$v_m$
Encoder
Average feature mechanism or attention mechanism
$c_{t1}$
$c_{t2}$
$c_{tn}$
$h_1$
$h_2$
$h_n$
$s_1$
$s_2$
$s_n$
Decoder
$z_1$
$z_2$
$z_j$
Reconstructor
S101 , Perform encoding and decoding on an original video by using an encoder and a decoder, to obtain a video feature of the original video and a hidden state of a decoding stage
S102 , Reconstruct a video feature of a target video by using a reconstructor according to the hidden state of the coding stage
S103 , Obtain a difference between the video feature of the target video and the video feature of the original video
S104 , Adjust a processing parameter of at least one of the decoder and the reconstructor according to the difference, to reduce the difference

FIG. 3

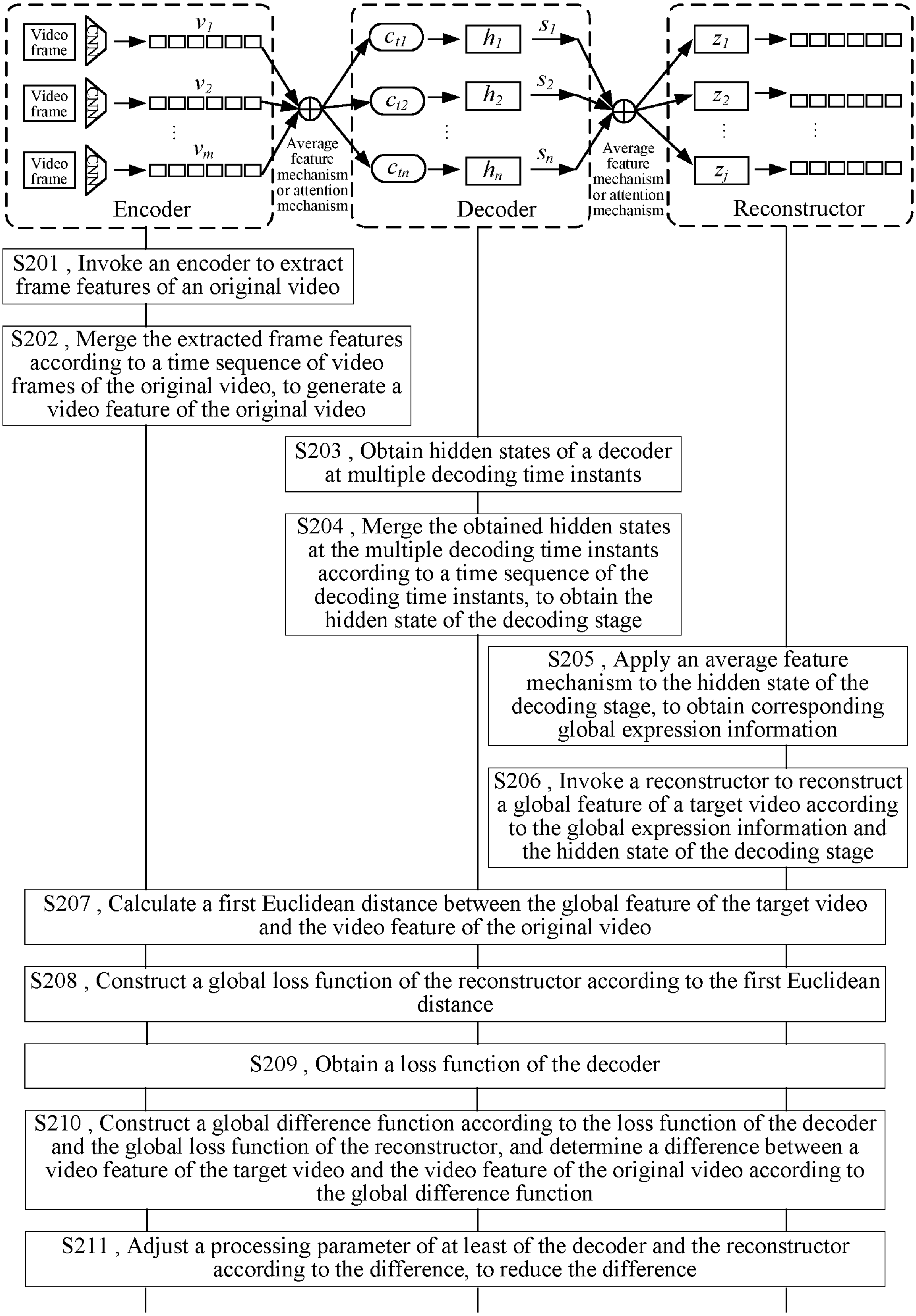
Video frame
CNN
$v_1$
$v_2$
$v_m$
Encoder
Average feature mechanism or attention mechanism
$c_{t1}$
$c_{t2}$
$c_{tn}$
$h_1$
$h_2$
$h_n$
$s_1$
$s_2$
$s_n$
Decoder
Average feature mechanism or attention mechanism
$z_1$
$z_2$
$z_j$
Reconstructor
S201 , Invoke an encoder to extract frame features of an original video
S202 , Merge the extracted frame features according to a time sequence of video frames of the original video, to generate a video feature of the original video
S203 , Obtain hidden states of a decoder at multiple decoding time instants
S204 , Merge the obtained hidden states at the multiple decoding time instants according to a time sequence of the decoding time instants, to obtain the hidden state of the decoding stage
S205 , Apply an average feature mechanism to the hidden state of the decoding stage, to obtain corresponding global expression information
S206 , Invoke a reconstructor to reconstruct a global feature of a target video according to the global expression information and the hidden state of the decoding stage
S207 , Calculate a first Euclidean distance between the global feature of the target video and the video feature of the original video
S208 , Construct a global loss function of the reconstructor according to the first Euclidean distance
S209 , Obtain a loss function of the decoder
S210 , Construct a global difference function according to the loss function of the decoder and the global loss function of the reconstructor, and determine a difference between a video feature of the target video and the video feature of the original video according to the global difference function
S211 , Adjust a processing parameter of at least of the decoder and the reconstructor according to the difference, to reduce the difference

FIG. 4

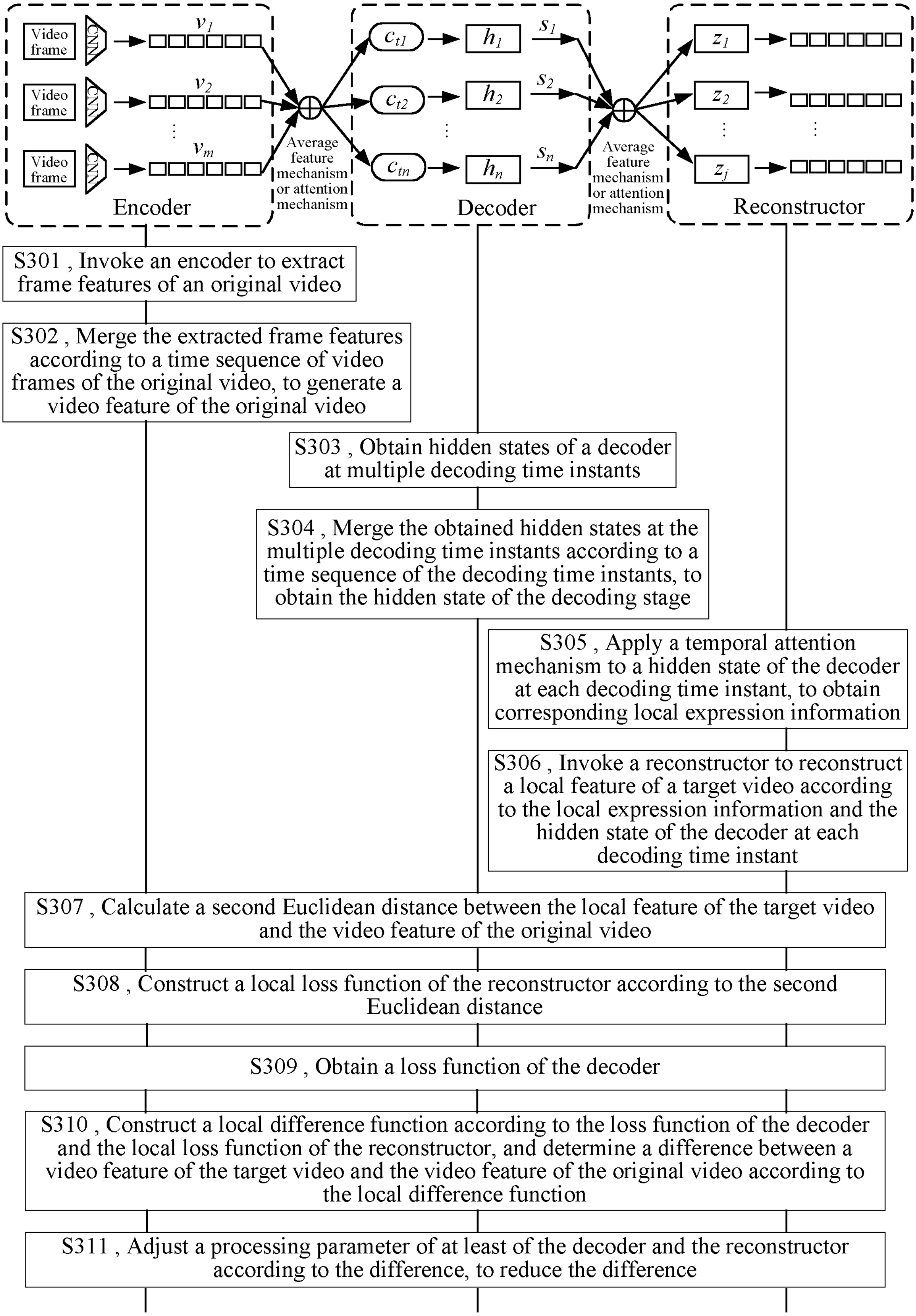
Video frame
CNN
$v_1$
$v_2$
$v_m$
Encoder
Average feature mechanism or attention mechanism
$c_{t1}$
$c_{t2}$
$c_{tn}$
$h_1$
$h_2$
$h_n$
$s_1$
$s_2$
$s_n$
Decoder
Average feature mechanism or attention mechanism
$z_1$
$z_2$
$z_j$
Reconstructor
S301 , Invoke an encoder to extract frame features of an original video
S302 , Merge the extracted frame features according to a time sequence of video frames of the original video, to generate a video feature of the original video
S303 , Obtain hidden states of a decoder at multiple decoding time instants
S304 , Merge the obtained hidden states at the multiple decoding time instants according to a time sequence of the decoding time instants, to obtain the hidden state of the decoding stage
S305 , Apply a temporal attention mechanism to a hidden state of the decoder at each decoding time instant, to obtain corresponding local expression information
S306 , Invoke a reconstructor to reconstruct a local feature of a target video according to the local expression information and the hidden state of the decoder at each decoding time instant
S307 , Calculate a second Euclidean distance between the local feature of the target video and the video feature of the original video
S308 , Construct a local loss function of the reconstructor according to the second Euclidean distance
S309 , Obtain a loss function of the decoder
S310 , Construct a local difference function according to the loss function of the decoder and the local loss function of the reconstructor, and determine a difference between a video feature of the target video and the video feature of the original video according to the local difference function
S311 , Adjust a processing parameter of at least of the decoder and the reconstructor according to the difference, to reduce the difference

FIG. 5

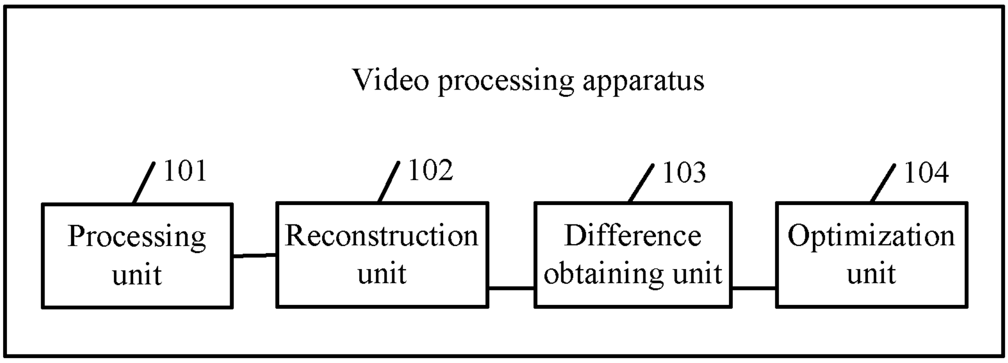
Video processing apparatus
101
102
103
104
Processing unit
Reconstruction unit
Difference obtaining unit
Optimization unit

FIG. 6

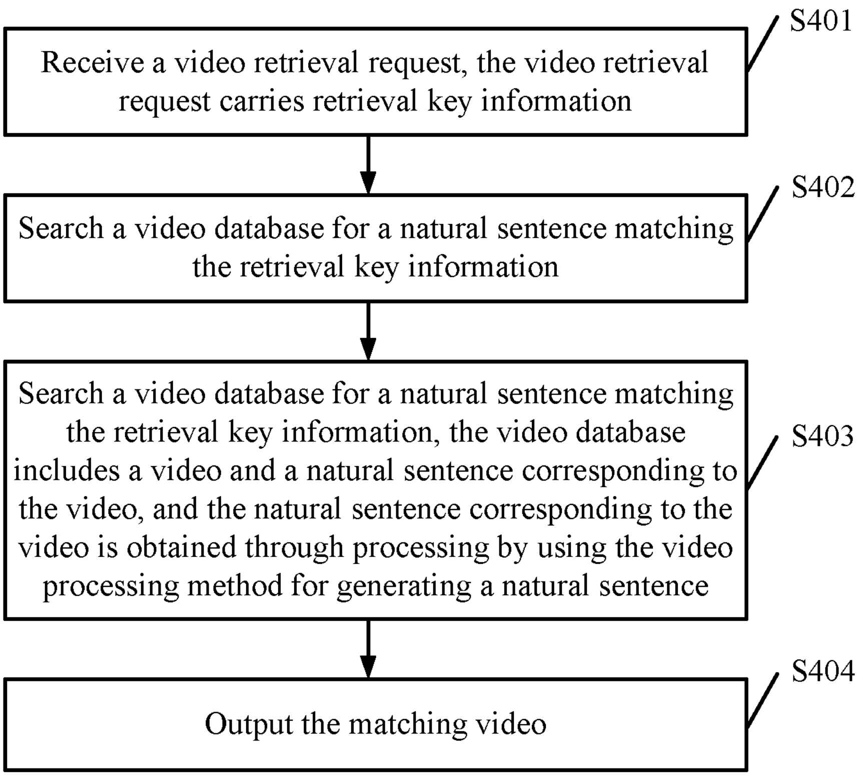
S401
Receive a video retrieval request, the video retrieval request carries retrieval key information
S402
Search a video database for a natural sentence matching the retrieval key information
S403
Search a video database for a natural sentence matching the retrieval key information, the video database includes a video and a natural sentence corresponding to the video, and the natural sentence corresponding to the video is obtained through processing by using the video processing method for generating a natural sentence
S404
Output the matching video

FIG. 7

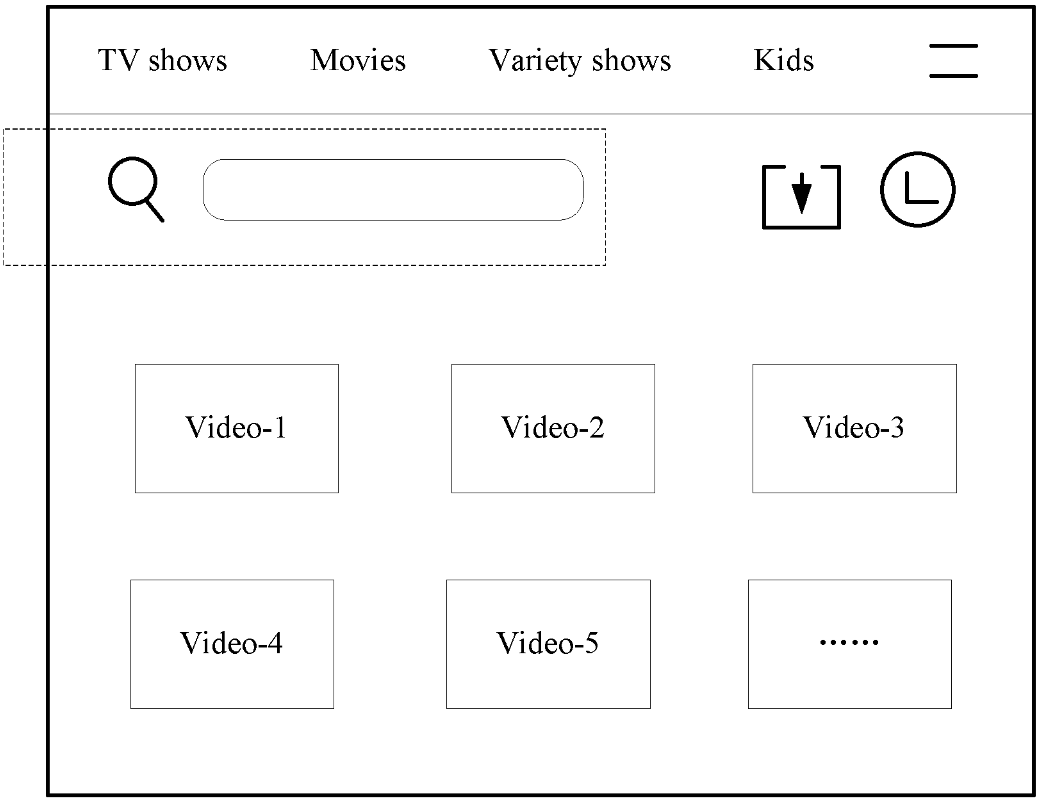
TV shows
Movies
Variety shows
Kids
Video-1
Video-2
Video-3
Video-4
Video-5
......

FIG. 8a

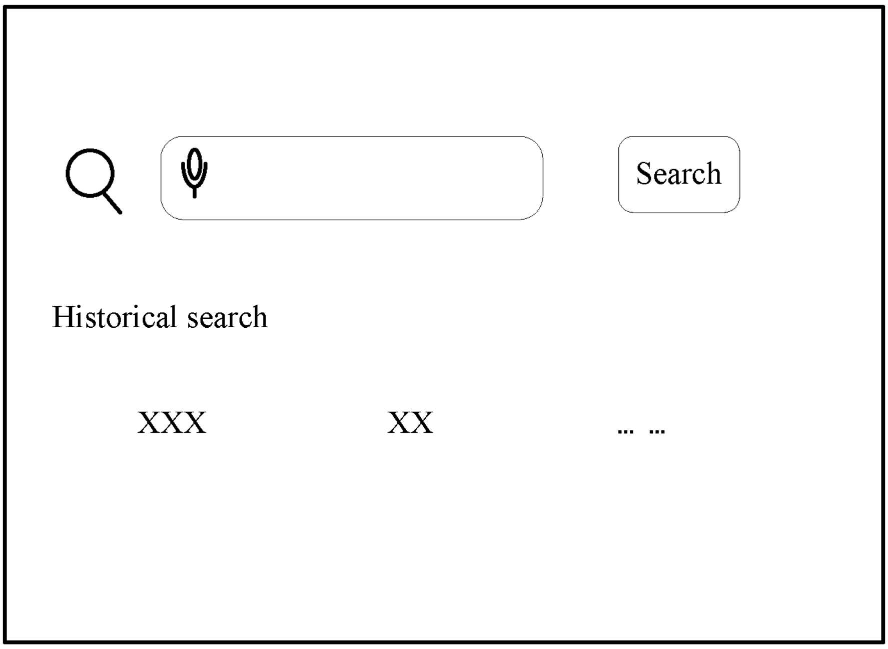
Search
Historical search
XXX
XX
... ...

FIG. 8b

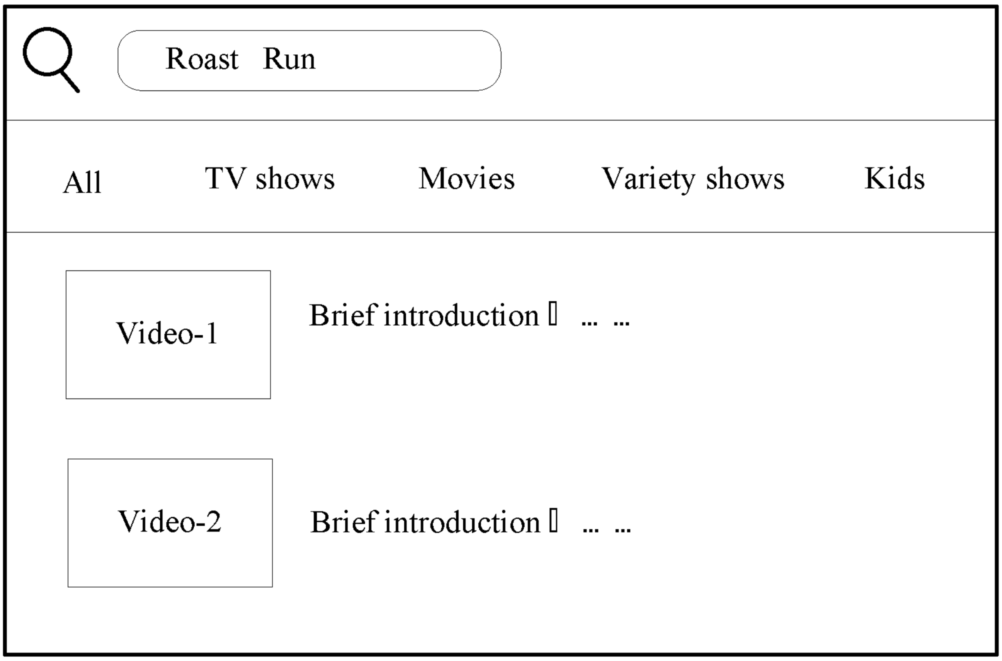
Roast Run
All
TV shows
Movies
Variety shows
Kids
Video-1
Brief introduction ... ...
Video-2
Brief introduction ... ...

FIG. 8c

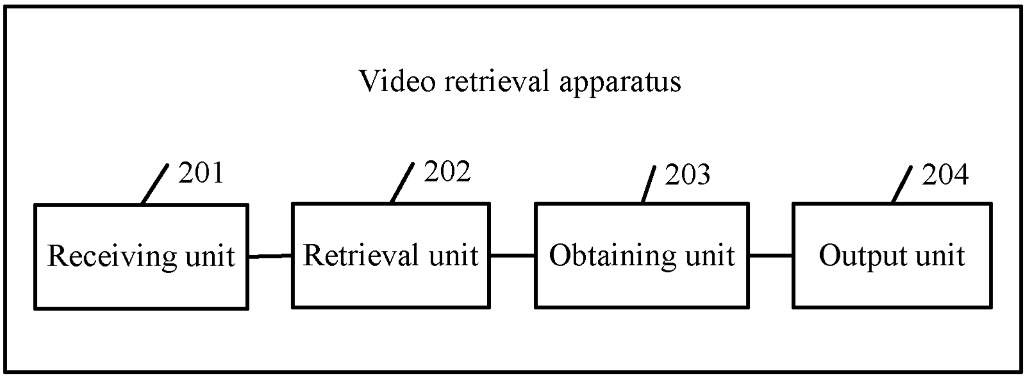
Video retrieval apparatus
201
202
203
204
Receiving unit
Retrieval unit
Obtaining unit
Output unit

FIG. 9

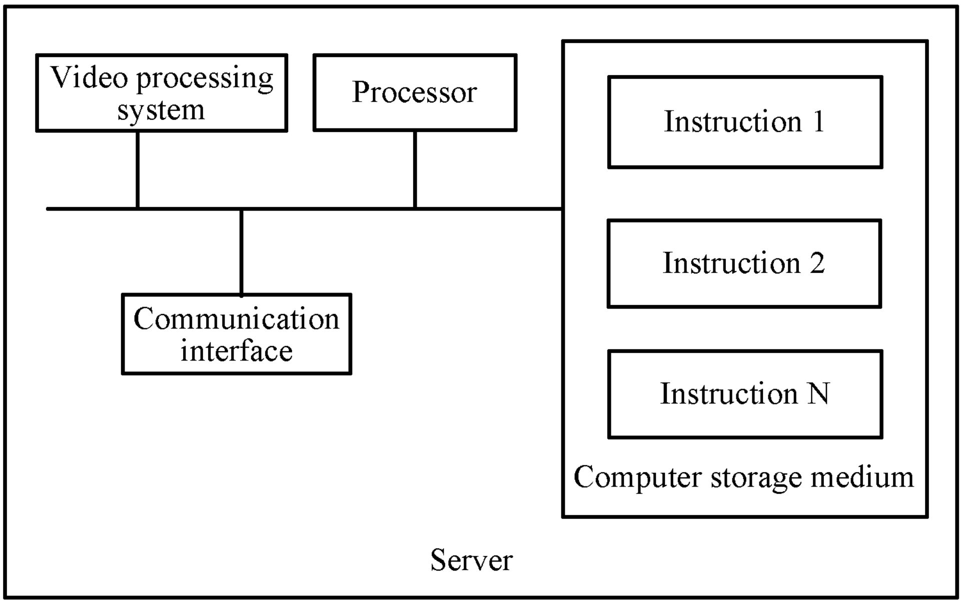
Video processing system
Processor
Instruction 1
Instruction 2
Instruction N
Communication interface
Computer storage medium
Server

FIG. 10

## INTERNATIONAL SEARCH REPORT

International application No.
**PCT/CN2019/075534**

**A. CLASSIFICATION OF SUBJECT MATTER**

G06K 9/00(2006.01)i

According to International Patent Classification (IPC) or to both national classification and IPC

**B. FIELDS SEARCHED**

Minimum documentation searched (classification system followed by classification symbols)

H04N,G06K

Documentation searched other than minimum documentation to the extent that such documents are included in the fields searched

Electronic data base consulted during the international search (name of data base and, where practicable, search terms used)

CNABS, CNKI, CNTXT, VEN, EPTXT, USTXT, WOTXT: 视频内容, 帧特征, 解码器, 校正, 隐藏状态, 调整, 重构器, 视频特征, 编码器, 视频, 视频摘要, 参数, video content, natural statement, encoding, decoding, reconstructed, video features, hidden state, difference, accuracy

**C. DOCUMENTS CONSIDERED TO BE RELEVANT**

| Category* | Citation of document, with indication, where appropriate, of the relevant passages | Relevant to claim No. |
|---|---|---|
| Y | CN 107066973 A (HANGZHOU DIANZI UNIVERSITY) 18 August 2017 (2017-08-18) description, paragraphs [0096]-[0106] | 1-20 |
| Y | CN 106331711 A (BEIJING UNIVERSITY OF TECHNOLOGY) 11 January 2017 (2017-01-11) description, paragraphs [0034]-[0075] | 1-20 |
| A | CN 104113789 A (HANGZHOU DIANZI UNIVERSITY) 22 October 2014 (2014-10-22) entire document | 1-20 |
| PX | CN 108419094 A (TENCENT TECHNOLOGY SHENZHEN CO., LTD.) 17 August 2018 (2018-08-17) claims | 1-20 |

☐ Further documents are listed in the continuation of Box C. ☑ See patent family annex.

* Special categories of cited documents:

"A" document defining the general state of the art which is not considered to be of particular relevance

"E" earlier application or patent but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **08 April 2019** | **15 April 2019** |

| Name and mailing address of the ISA/CN | Authorized officer |
|---|---|
| **State Intellectual Property Office of the P. R. China**<br>**No. 6, Xitucheng Road, Jimenqiao Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.
**PCT/CN2019/075534**

| Patent document cited in search report | Publication date (day/month/year) | Patent family member(s) | Publication date (day/month/year) |
|---|---|---|---|
| CN 107066973 A | 18 August 2017 | None | |
| CN 106331711 A | 11 January 2017 | None | |
| CN 104113789 A | 22 October 2014 | CN 104113789 B | 12 April 2017 |
| CN 108419094 A | 17 August 2018 | None | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 201810179638